**Europäisches Patentamt**

**European Patent Office**

**Office européen des brevets**

(19)

(11) Veröffentlichungsnummer : **0 162 275**
**B1**

(12) ## EUROPÄISCHE PATENTSCHRIFT

(45) Veröffentlichungstag der Patentschrift :
**28.09.88**

(51) Int. Cl.⁴ : **B 23 K   7/10//** B22D11/126

(21) Anmeldenummer : **85104506.2**

(22) Anmeldetag : **13.04.85**

(54) Strangbrennschneidmaschine zum thermischen Trennen.

(30) Priorität : **24.04.84 DE 8412636 U**

(43) Veröffentlichungstag der Anmeldung :
**27.11.85 Patentblatt 85/48**

(45) Bekanntmachung des Hinweises auf die Patenterteilung : **28.09.88 Patentblatt 88/39**

(84) Benannte Vertragsstaaten :
**DE FR GB IT**

(56) Entgegenhaltungen :
**AT-B-   183 181**
**DE-A- 3 035 239**
**DE-A- 3 209 818**
**DE-A- 3 231 187**

(73) Patentinhaber : **AUTE Gesellschaft für autogene Technik mbH**
**Wassbergstrasse 28**
**CH-8127 Forch/ZH (CH)**

(72) Erfinder : **Lotz, Horst K.**
**Kiefernweg 13**
**D-6200 Wiesbaden-Delkenheim (DE)**

(74) Vertreter : **Blumbach Weser Bergen Kramer Zwirner Hoffmann Patentanwälte**
**Radeckestrasse 43**
**D-8000 München 60 (DE)**

## Beschreibung

Die Erfindung betrifft eine Strangbrennschneidmaschine zum thermischen Trennen von heißen, leicht ausknickenden und mit an- und abschwellender Geschwindigkeit oder mit wechselnder Bewegungsrichtung waagerecht geförderter Stränge mit einem auf einer Laufbahn parallel zum Strang bewegbaren Brennerwagen, dessen Bewegung mit dem Strang während des Schneidvorganges durch eine am Strang angreifende Anklemmeinrichtung sichergestellt ist, und mit einer gegenüber der Brennschneidmaschine einen Wärme- und Strahlungsschutz bewirkenden Schutzhaube, die in unmittelbarer Nähe am Strang unter der Brennschneidmaschine vorgesehen ist und den Strang abdeckt und teilweise umgibt.

Derartige Brennschneidmaschinen sind stark der Hitze ausgesetzt, die von dem Strang, der von der Brennschneidmaschine zerteilt werden soll, ausgeht. Dadurch ist es erforderlich, die Strangbrennschneidmaschine mit ihren Aggregaten durch Kühleinrichtungen oder in sonstiger Weise, z. B. durch eine große Anzahl von Wärmeableitblechen, gegen die starke Wärmeabstrahlung vom Strang zu schützen. Das bedingt nicht nur eine Erhöhung des Maschinengewichts, sondern verteuert die Maschine auch, indem u. a. höhere Antriebsleistungen erforderlich werden.

Es ist bekannt, zum Wärme- und Strahlungsschutz gegenüber der Brennschneidmaschine eine Schutzhaube mit Isolierwirkung in unmittelbarer Nähe am Strang unter der Brennschneidmaschine vorzusehen, wobei die Schutzhaube ortsfest unterhalb der Brennschneidmaschine bzw. über dem Strang an der Schienenlaufbahn befestigt ist (DE-A-3 035 239).

Der Erfindung liegt daher die Aufgabe zugrunde, eine Strangbrennschneidmaschine der eingangs genannten Art verfügbar zu machen, bei der Wärme- und Strahlungsschutzprobleme in rationeller und kostengünstiger Weise vermieden werden.

Die Erfindung besteht darin, daß die Schutzhaube sich synchron mit der Brennschneidmaschine bzw. dem Strang bewegt, daß Durchbrechungen in der Schutzhaube vorgesehen sind, durch welche sich der Brenner und die Anklemmeinrichtung erstrecken, und daß die Schutzhaube sich überlappend zwischen am vorderen und hinteren Ende der Brennschneidstrecke angeordneten Wärmehaltehauben verschiebt.

Mit Vorteil ist die Schutzhaube an der Brennschneidmaschine befestigt und hängt von dieser bis zum Strang herab.

In zweckmäßiger Weise kann dabei vorgesehen sein, daß ein gesonderter Antrieb die Schutzhaube synchron zum Brenner bewegt. Dabei kann die Schutzhaube zweckmäßig flach, halbrund oder U-förmig sein.

In einer weiteren Ausbildung schlägt die Erfindung vor, daß die Schutzhaube mit Isolierstoff versehen ist und wärmerückstrahlende Eigenschaften hat, sowie eine Kühlung durch Abstrahlung bzw. durch Kühlmittel von außen besitzt.

Eine Ausführungsform der Erfindung besteht darin, daß die Brennschneidmaschine in Leichtbauweise ein nicht isoliertes und nicht wassergekühltes Maschinengehäuse umfaßt und als leichter Maschinenrahmen mit Anklemm- und Schneidvorrichtung ausgebildet ist.

Weitere vorteilhafte Maßnahmen bestehen darin, daß der untere Teil des Brenners, der sich durch die Schutzhaube erstreckt, wassergekühlt ist und daß die Anklemmhebel durch einen Balgzylinder betätigbar sind.

Die Erfindung soll nachstehend anhand eines Ausführungsbeispiels unter Bezugnahme auf die beigefügten Zeichnungen näher erläutert werden. In den Zeichnungen zeigen :

Fig. 1 die Seitenansicht einer Brennschneidmaschine ;

Fig. 2 die Schnittansicht längs der Linie B-B in Fig.1.

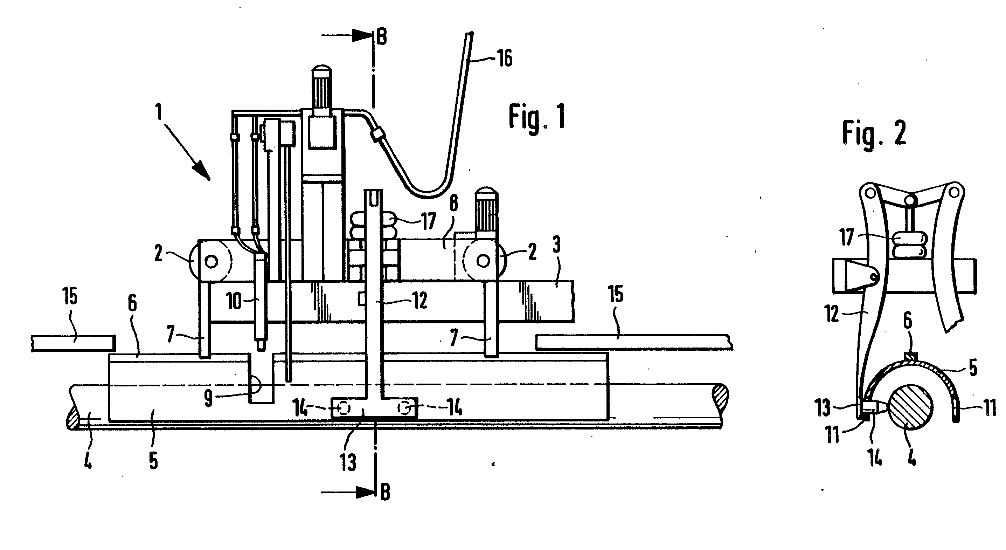

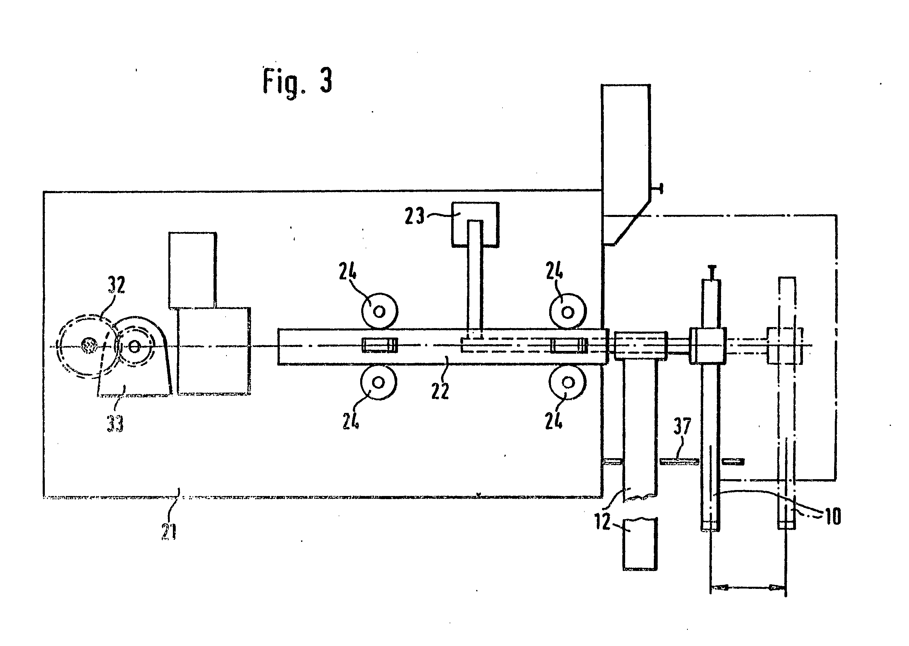

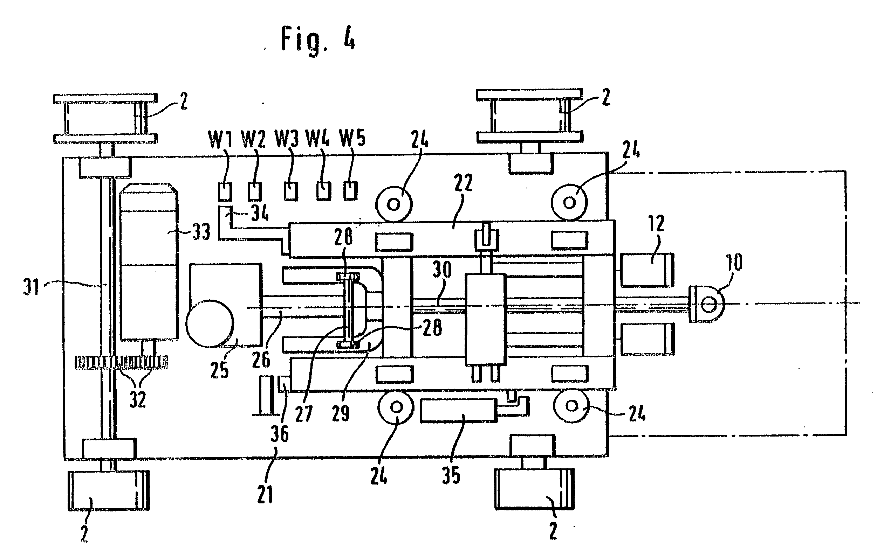

In Fig. 1 ist eine Brennschneidmaschine 1 dargestellt die mit Rädern 2 sich längs einer Brennerwagenlaufbahn 3 bewegt. Die Brennerwagenlaufbahn 3 verläuft parallel zu einem Strang 4,. der im Bereich der Brennschneidmaschine 1 mit einer Schutzhaube 5 zum Wärme- und Strahlungsschutz abgedeckt ist. Die Schutzhaube 5 ist an einem Halter 6 befestigt, der über Verbindungsträger 7 am Hauptrahmen 8 der Brennschneidmaschine 1 befestigt ist. Auf diese Weise bewegt sich die Schutzhaube 5 synchron mit der Brennschneidmaschine 1. In der Schutzhaube 5 ist eine Durchbrechung 9 vorgesehen, durch die sich der Brenner 10 bewegt, und durch eine Durchbrechung 11 erstreckt sich ein Anklemmhebel 12, der eine Klemmbacke 13 aufweist, die mit zwei Kontaktvorsprüngen 14 am Strang 4 zur Anlage kommt, so daß ein Verkanten der Brennschneidmaschine 1 verhindert ist.

In Fig. 2 ist dargestellt, wie ein Kontaktvorsprung 14 an der Klemmbacke 13, die sich durch eine Durchbrechung in der Schutzhaube 5 erstreckt, mit dem Strang 5 zur Anlage kommt. Die in Fig. 2 dargestellte Schutzhaube 5 hat eine halbrunde Gestalt, kann aber auch flach oder U-förmig ausgebildet sein. Die Schutzhaube selbst ist mit Isolierstoff versehen und weist vorzugsweise wärmerückstrahlende Eigenschaften auf. Fall erforderlich kann die Schutzhaube 5 auch mit zusätzlichen, nicht dargestellten Einrichtungen zur Kühlung ausgestattet sein.

Um einen unnötigen Temperaturverlust beim Strang 4 zu vermeiden, sind an beiden Seiten der Brennschneidstrecke Wärmehaltehauben 15 vorgesehen, zwischen denen sich die Schutzhaube 5 überlappend oder teleskopartig hin- und herbewegt, wie aus Fig. 1 zu entnehmen ist. Da durch die Schutzhaube 5 in unmittelbarer Nähe am Strang 4 ein wirksamer Wärme- und Strahlungsschutz für die gesamte Brennschneidmaschine 1 gegeben ist, kann diese in Leichtbauweise hergestellt werden, und auf weitere isolierende und wärmeschützende Maßnahmen kann bei der Brennschneidmaschine 1 verzichtet werden. Insbesondere ist es nicht mehr erforderlich, ein wassergekühltes Maschinengehäuse vorzusehen, und auch sonst ergibt sich durch die Maßnahme, an der Brennschneidmaschine 1 herabhängend durch die Verbindungsträger 7 eine Schutzhaube 5 anzuordnen, eine Reihe von weiteren Vorteilen. Es ist nicht nur eine Gewichtsverringerung von etwa 50 % möglich, sondern auch der Schwerpunkt der Maschine kann wesentlich nach unten verlagert werden. Indem keine Verbindungswelle mit Lager- und Kupplungseinrichtungen notwendig ist, kann eine massive Brennerlagerung vorgesehen werden. Dadurch, daß die Maschine keinerlei Hitzebelastungen ausgesetzt ist und entsprechende Schutzmaßnahmen entfallen, ist der Zugang wesentlich vereinfacht und damit die Wartung erleichtert. Es ist keine Schleppkette erforderlich, und — wie Fig. 1 zeigt — können die Versorgungsschläuche 16 frei zur Brennschneidmaschine 1 geführt werden. Der Brenner 10 kann eine verhältnismäßig kurze Ausgestaltung erfahren, und zur Betätigung der Klemmhebel 12 kann ein Balgzylinder 17 vorgesehen sein, was sich verbietet, wenn die Brennschneidmaschine 1 einer großen Hitzebelastung ausgesetzt ist. Desweiteren entfällt auch eine Kühlung der Laufbahnschienen 3 und des Gerüstes, das in seiner Höhe drastisch reduziert werden kann. So ist es generell möglich, die Höhe der Maschine von etwa 2,6 m auf 1,5 m zu reduzieren. Indem die Abstrahlung von den Strängen verhindert ist, können auch die seitlichen Abstände zweier benachbarter Stränge mit zugeordneten Brennschneidmaschinen 1 wesentlich verringert werden.

Es wird auf die Teilanmeldung EP-A-0 253 414 hingewiesen.

## Patentansprüche

1. Strangbrennschneidmaschine zum thermischen Trennen von heißen, leicht ausknickenden und mit an- und abschwellender Geschwindigkeit oder mit wechselnder Bewegungsrichtung waagerecht geförderter Stränge mit einem auf einer Laufbahn parallel zum Strang bewegbaren Brennerwagen, dessen Bewegung mit dem Strang während des Schneidvorganges durch eine am Strang angreifende Anklemmeinrichtung sichergestellt ist, und mit einer gegenüber der Brennschneidmaschine einen Wärme- und Strahlungsschutz bewirkenden Schutzhaube, die in unmittelbarer Nähe am Strang unter der Brennschneidmaschine vorgesehen ist und den Strang abdeckt und teilweise umgibt, dadurch gekennzeichnet, daß die Schutzhaube (5) sich synchron mit der Brennschneidmaschine (1) bzw. dem Strang (4) bewegt, daß Durchbrechungen (9, 11) in der Schutzhaube (5) vorgesehen sind, durch welche sich der Brenner (10) und die Anklemmeinrichtung (12, 13, 14) erstrecken, und daß die Schutzhaube (5) sich überlappend zwischen am vorderen und hinteren Ende der Brennschneidstrecke angeordneten Wärmehaltehauben (15) verschiebt.

2. Brennschneidmaschine nach Anspruch 1, dadurch gekennzeichnet, daß die Schutzhaube (5) an der Brennschneidmaschine (1) befestigt (7) ist und von dieser bis zum Strang (4) herabhängt.

3. Brennschneidmaschine nach Anspruch 1, dadurch gekennzeichnet, daß ein gesonderter Antrieb die Schutzhaube (5) synchron zum Brenner (10) bewegt.

4. Brennschneidmaschine nach einem der Ansprüche 1 bis 3, dadurch gekennzeichnet, daß die Schutzhaube (5) flach, halbrund oder U-förmig ist.

5. Brennschneidmaschine nach einem der Ansprüche 1 bis 4, dadurch gekennzeichnet, daß die Schutzhaube (5) mit Isolierstoff versehen ist und wärmerückstrahlende Eigenschaften hat sowie eine Kühlung durch Abstrahlung bzw. durch Kühlmittel von außen besitzt.

6. Brennschneidmaschine nach einem der Ansprüche 1 bis 5, dadurch gekennzeichnet, daß die Brennschneidmaschine (1) in Leichtbauweise ein nicht isoliertes und nicht wassergekühltes Maschinengehäuse umfaßt und als leichter Maschinenrahmen mit Anklemm- (12, 13, 14) und Schneidvorrichtung (10) ausgebildet ist.

7. Brennschneidmaschine nach einem der Ansprüche 1 bis 6, dadurch gekennzeichnet, daß der untere Teil des Brenners (10), der sich durch die Schutzhaube (5) erstreckt, wassergekühlt ist.

8. Brennschneidmaschine nach einem der Ansprüche 1 bis 7, dadurch gekennzeichnet, daß die Anklemmhebel (12) durch einen Balgzylinder (17) betätigbar sind.

## Claims

1. A cutting torch apparatus for the thermal severance of hot readily buckling strands which are conveyed horizontally at a varying speed or in a varying direction of movement, the apparatus comprising : a torch carriage which is movable on a track parallel to the strand and which is secured in movement therewith during the cutting operation by a clamping device which engages the strand ; and a hood which protects the cutting torch apparatus against heat and radiation, is disposed very near the strand below such apparatus, covers the strand and extends to some extent therearound, characterised in that the hood (5) moves synchronously with the cutting torch apparatus (1) - i. e., the strand (4) - and is formed with apertures (9, 11) through which the burner (10) and the clamping device (12, 13, 14) extend and moves in an overlapping relationship between heat-retaining hoods (15) disposed at the front end and rear end of the cutting torch path.

2. An apparatus according to claim 1, characterised in that the protective hood (5) is secured to the cutting torch apparatus (1) and extends downwardly therefrom as far as the strand (4).

3. An apparatus according to claim 1, characterised in that a separate drive moves the protective hood (5) synchronously with the burner (10).

4. An apparatus according to any of claims 1-3, characterised in that the protective hood (5) is flat or half-round or U-shaped.

5. An apparatus according to any of claims 1-4, characterised in that the protective hood (5) has an insulant and heat-reflecting properties and is cooled by radiation or by the coolant from the outside.

6. An apparatus according to any of claims 1-5, characterised in that the apparatus (1) comprises an uninsulated and non-water-cooled apparatus casing of light construction and is in the form of a lightweight apparatus frame comprising clamping means (12-14) and cutting means (10).

7. An apparatus according to any of claims 1-6, characterised in that the bottom part of the burner (10) extending through the protective hood (5) is water-cooled.

8. An apparatus according to any of claims 1-7, characterised in that the clamping levers (12) are adapted to be actuated by cylindrical bellows (17).

**Revendications**

1. Machine d'oxycoupage de matériel extrudé pour la séparation thermique de billettes chaudes, s'infléchissant facilement et transportées horizontalement à une vitesse passant par des phases de croissance et de décroissance, ou dans un sens de déplacement alterné, cette machine comportant un chariot porte-chalumeau se déplaçant sur un chemin de roulement parallèlement à la billette, dont le déplacement avec la billette pendant l'opération d'oxycoupage est assuré grâce à un dispositif de serrage agissant sur la billette, et comportant également un capot de protection contre la chaleur et le rayonnement pour la machine d'oxycoupage, qui est prévu dans le voisinage immédiat de la billette sous la machine d'oxycoupage et qui recouvre la billette en l'entourant en partie, caractérisée en ce que le capot de protection (5) se déplace en synchronisme avec la machine d'oxycoupage (1) et la billette (4), que sont prévues dans le capot de protection (5) des ouvertures (9, 11) à travers lesquelles passent le chalumeau (10) et le dispositif de serrage (12, 13, 14), et que le capot de protection (5) se déplace suivant un mouvement de chevauchement entre des capots de conservation de la chaleur (15) disposés à l'extrémité avant et à l'extrémité arrière du parcours d'oxycoupage.

2. Machine d'oxycoupage selon la revendication 1, caractérisée en ce que le capot de protection (5) est fixé (7) à la machine d'oxycoupage (1) de laquelle il pend en retombant jusqu'à la billette (4).

3. Machine d'oxycoupage selon la revendication 1, caractérisée en ce qu'une commande d'entraînement particulière déplace le capot de protection (5) de façon synchronisée avec le chalumeau (10).

4. Machine d'oxycoupage selon une quelconque des revendications 1 à 3, caractérisée en ce que le capot de protection (5) est de configuration plate, semi-circulaire ou en U.

5. Machine d'oxycoupage selon une quelconque des revendications 1 à 4, caractérisée en ce que le capot de protection est pourvu d'une matière isolante et possède des propriétés de réflexion de la chaleur, et est également doté d'un refroidissement par rayonnement de chaleur ou grâce à des agents refroidisseurs de l'extérieur.

6. Machine d'oxycoupage selon une quelconque des revendications 1 à 5, caractérisée en ce que la machine d'oxycoupage (1) est réalisée en construction légère, qu'elle comprend un corps de machine non isolé et non refroidi par eau, et qu'elle présente la configuration d'un cadre de machine léger avec un dispositif de serrage (12, 13, 14) et un dispositif d'oxycoupage (10).

7. Machine d'oxycoupage selon une quelconque des revendications 1 à 6, caractérisée en ce que la partie inférieure du chalumeau (10) qui s'étend à travers le capot de protection (5) est refroidi par eau.

8. Machine d'oxycoupage selon une quelconque des revendications 1 à 7, caractérisée en ce que les leviers de serrage (12) sont actionnés par un cylindre à soufflet (17).

Fig. 1

Fig. 2

Fig. 3

0 162 275

Fig. 4